# EUROPEAN PATENT APPLICATION

(11) **EP 4 776 197 A1**
(43) Date of publication of application: **15.07.2026**
(21) Application number: 25150914.7
(22) Date of filing: 09.01.2025
(51) Int. Cl.: G06Q 10/047, G06Q 10/0631, G06Q 10/08, G06Q 10/087

(54) **COMPUTER-IMPLEMENTED METHOD FOR DETERMINING A USER ACCESS ROUTE TO A TARGET LOCATION IN A STORAGE GRID FOR AN AUTOMATED STORAGE AND RETRIEVAL SYSTEM**

(71) Applicant: AutoStore Technology AS, 5578 Nedre Vats (NO)
(72) Inventor: Ivarjord, Åsmund, 5578 Nedre Vats (NO)
(74) Representative: Kilburn & Strode LLP

(57) **Abstract**

The disclosure relates to a computer-implemented method for determining a user access route to a target location within a storage grid for an automated storage and retrieval system. The method comprises receiving an indicator of the target location, receiving data associated with a current storage configuration of the storage grid, and determining a user access route to the target location, in view of the current storage configuration of the storage grid.

## Description

### TECHNICAL FIELD

The disclosure relates to a computer-implemented method for determining a user access route to a target location in a storage grid for an automated storage and retrieval system. It also relates to a method of configuring a storage grid for an automated storage and retrieval system, to provide a user access route to a target location.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles may include sensor devices that can track their position relative to the rail system. Alternatively, external devices may be used to track locations of one or more robotic container-handling vehicles relative to the rail system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flowchart of a computer-implemented method for determining a user access route to a target location within a storage grid of an automated storage and retrieval system;
Fig. 6 shows a storage grid, in plan view, including a user access route determined according to the method of Fig. 5;
Fig. 7 shows a storage grid, in cross-sectional view, including a user access route that traverses multiple horizontal levels of the storage grid;
Fig. 8 shows a flowchart of a method 800 for configuring a storage grid for an automated storage and retrieval system, to provide a user access route to a target location within the storage grid.

### DETAILED DESCRIPTION

In overview, the disclosure relates to a computer-implemented method for determining a user access route to a target location in a storage grid for an automated storage and retrieval system. In overview, the disclosure relates to a method for configuring a storage grid for an automated storage and retrieval system, to provide a user access route to a target location within the storage grid. An indicator of the target location and data associated with a current storage configuration of the storage grid may be used, to determine a user access route to the target location. An indicator of the target location may be received. Data associated with the current storage configuration of the grid may be received. A user access route to the target location may then be determined, in view of the current storage configuration of the storage grid.

The target location may comprise a location within and/or on the storage grid. The target location may comprise a single location, corresponding to a co-ordinate, within the grid, within which a single storage container (bin) may be stored. The target location may comprise an extended location, corresponding to multiple co-ordinates, within the grid, within which more than one storage container (bin) may be stored. The target location may itself comprise a pathway within, or section of, the grid.

The target location may be a location at which user input is required or desired, for example (but not limited to) for the purpose of one or more of: cleaning, safety inspection, maintenance, and so on. One or more control signals may be output, to make one or more changes to the grid, to (help) provide a user access route to a target location. A remotely operated vehicle may be controlled to (help) provide a user access route to a target location. By using the data associated with the current storage configuration of the storage grid, a user access route to the target location may be determined, wherein that route is achievable and safe for the user. By using the data associated with the current storage configuration of the storage grid, a user access route to the target location may be determined, wherein relatively few changes to the storage configuration of the storage grid may be required, in order to provide the user access route.

### Automated storage and retrieval system overview

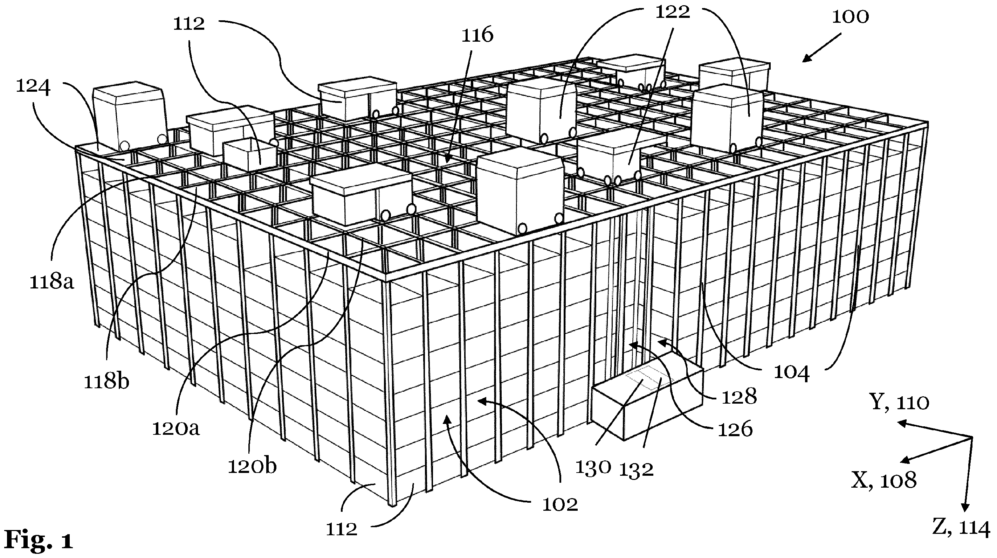

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

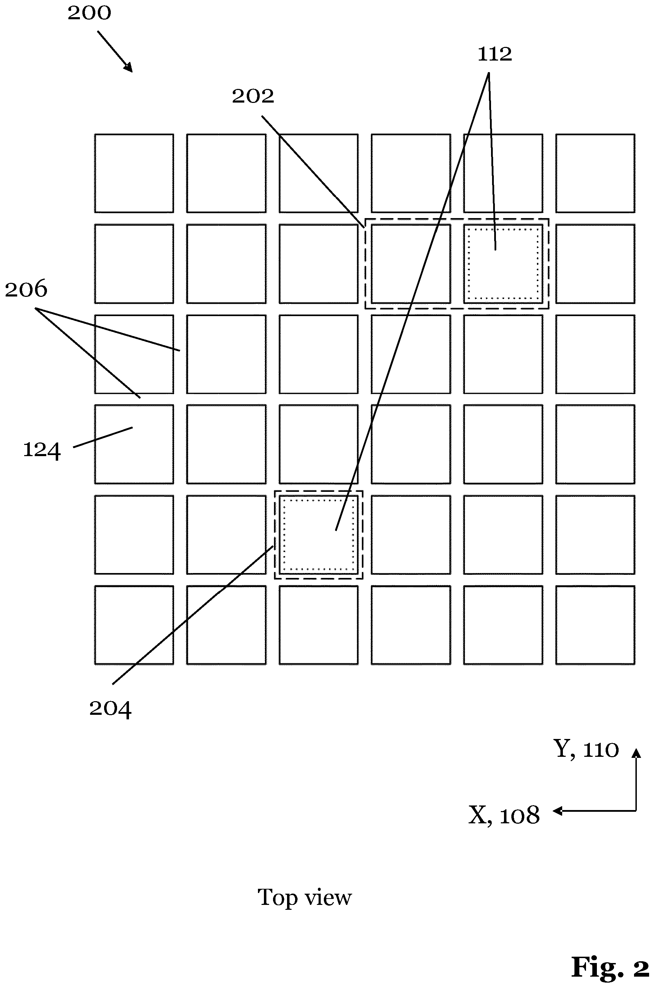

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

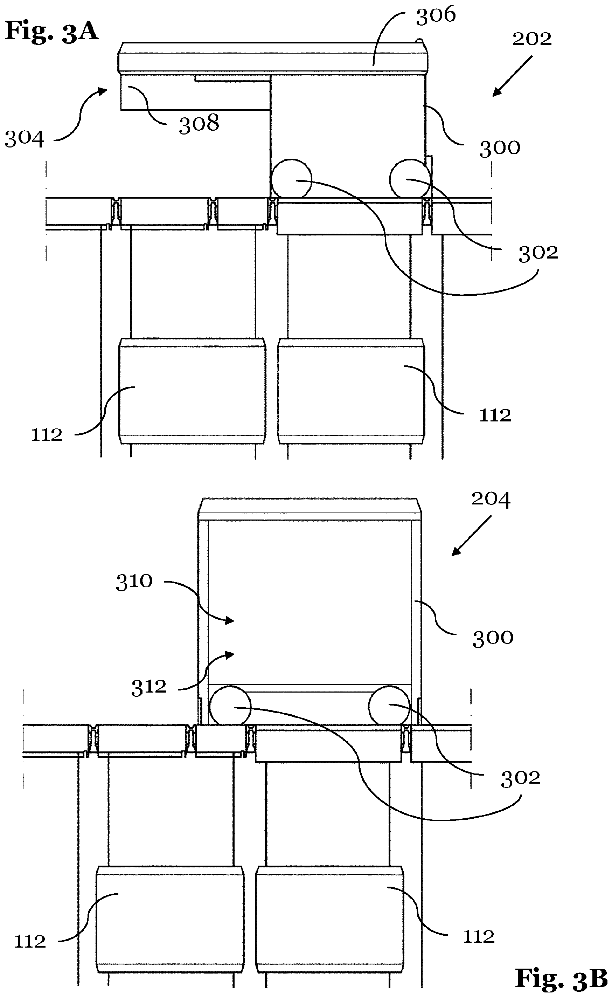

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

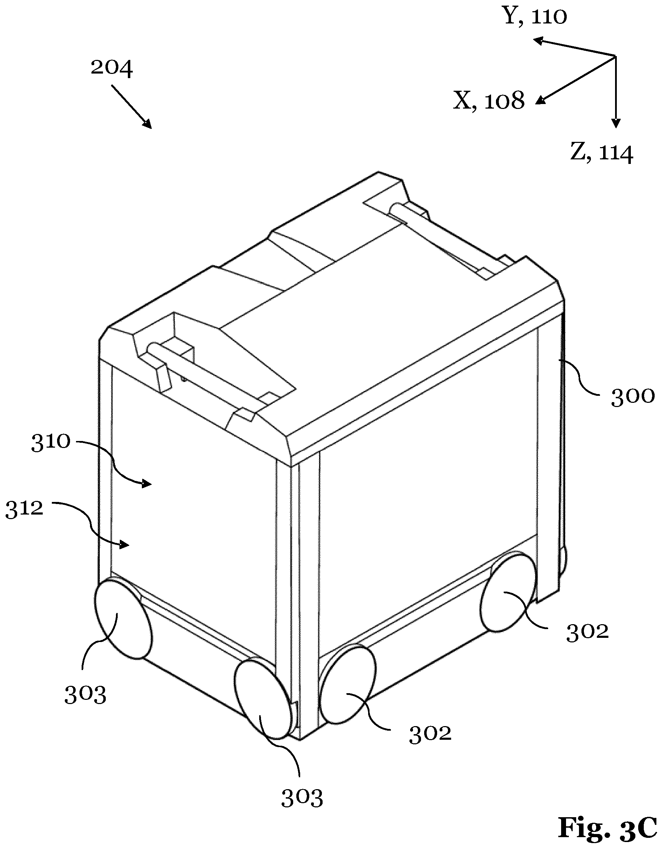

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

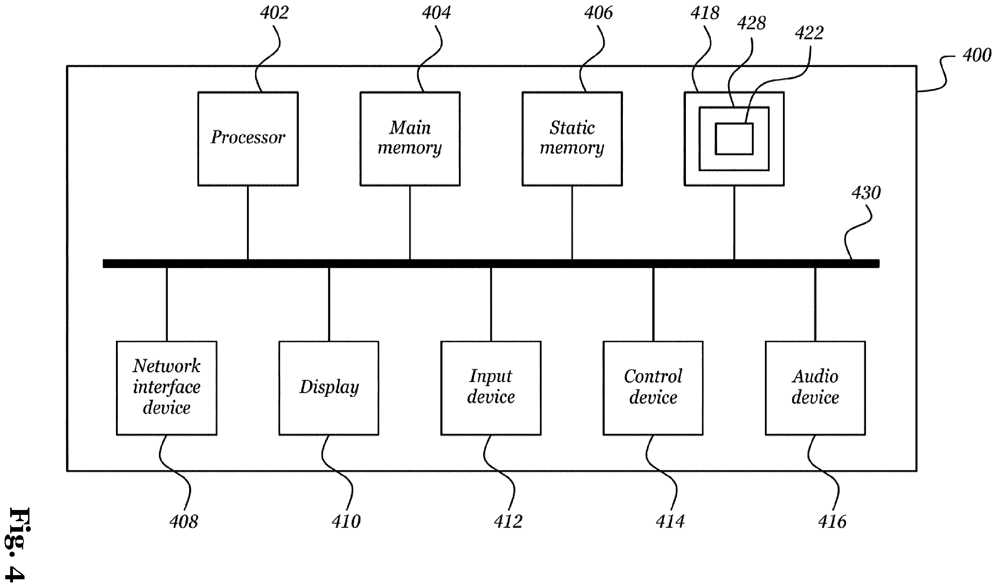

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Determining a user access route to a target location

At times there may be demands, within the storage grid of an automated storage and retrieval system, for intervention such as (by way of example, and not limited to) cleaning, inspection, and/or maintenance, for which a physical (human) user presence within the grid may be desired or required. For example, climate-controlled storage grids and/or storage grids in which food or other perishable items may be stored, may give rise to a demand for a physical (human) user presence within the grid, at times. For example, such a demand may arise for non-climate-controlled storage grids and/or for storage grids in which food or other perishable items are not stored.

In some automated storage and retrieval systems, all storage containers must be removed from the storage grid, before user access to the grid is permitted. However, removing all storage containers from within a storage grid and subsequently reinstalling them is a time consuming and therefore costly process, and may create an issue of where to locate the containers in the interim. Such an approach creates significant downtime for the automated storage and retrieval system, thereby reducing throughput and efficiency of the automated storage and retrieval system.

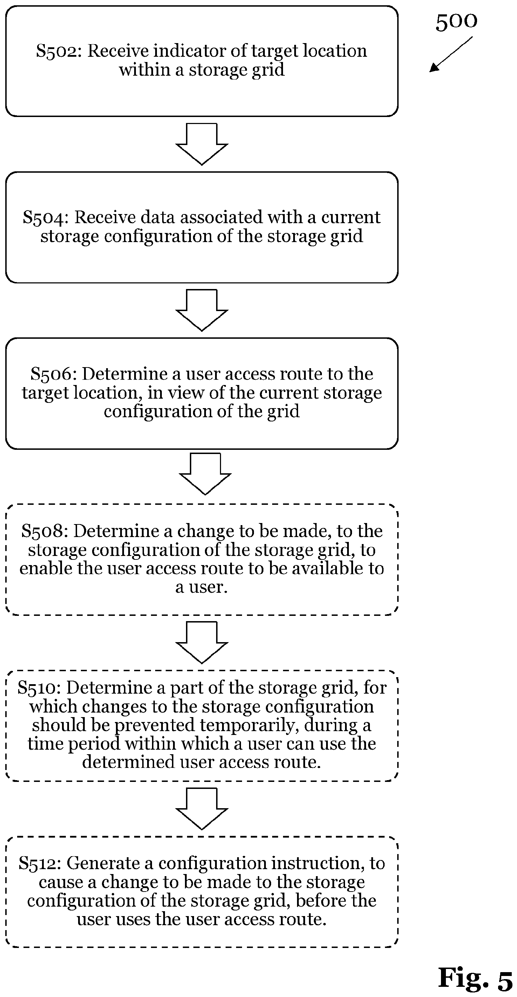

Fig. 5 is a flowchart of a computer-implemented method 500, according to the present disclosure, for determining a user access route to a target location within a storage grid of an automated storage and retrieval system. The method 500 may be implemented by the processing system 400, or by a distinct processing system (e.g., by a processing system of a robotic container-handling vehicle), or by any other suitable processor or controller.

At S502, the processing system receives an indicator of the target location, at which a user presence may be demanded or desired.

The target location may comprise a location in and/or on the storage grid. The indicator of the target location may comprise the identity of the target location *per se.* The indicator of the target location may comprise an indirect indicator, from which the target location may be determined.

The indicator of the target location may be generated by any appropriate mechanism. For example, it may be generated as a result of an output from a sensor comprised on or within a robotic container-handling vehicle, operating on the storage grid. For example, it may be generated as a result of an output from a sensor comprised on or within a storage container, stored within the storage grid. For example, it may be generated as a result of an output from a sensor comprised on or within a frame, or frame member, of the storage grid. For example, it may be generated as a result of a predetermined schedule for user presence within the grid.

At S504, the processing system receives data associated with a current storage configuration of the storage grid.

As explained above, a storage grid of an automated storage and retrieval system typically comprises a frame formed by a plurality of generally rectilinear, adjacent vertical columns, formed between vertical frame members, and extending in the X and Y directions. The data associated with the current storage configuration of the storage grid may comprise a storage status of one or more of said vertical columns. For example, it may comprise an indication of the number of storage containers (or, bins) stored within a vertical column. For example, it may comprise an indication of the horizontal layers, or levels, within a vertical column, at which one or more bins is currently stored. For example, it may comprise an indication of the number of bins stored within the storage grid and the location of one or more of those bins, within the storage grid. As explained above, a database of the processing system may store, in association with the unique identifier of a bin, the position of the bin 112 and, optionally, the content of the bin 112. The data associated with a current storage configuration of the storage grid may include the unique identifiers, and/or positions, and/or contents of one or more respective bins, within the storage grid at a given time.

The data associated with the current storage configuration of the storage grid may comprise a future change to the storage configuration of the storage grid. For example, it may comprise a planned, demanded, or expected future (i.e., upcoming) change to the storage configuration of the storage grid. For example, it may comprise a planned, demanded, or expected removal of a bin from a particular column of the storage grid. For example, it may comprise a planned, demanded, or expected storage of a bin within a particular column of the storage grid. For example, it may comprise a planned, demanded, or expected removal of a bin from the storage grid. For example, it may comprise a planned, demanded, or expected change of position or location of a particular bin, within the storage grid. For example, it may comprise a planned, demanded, or expected movement of a robotic container-handling vehicle, relative to the storage grid.

The data associated with the current storage configuration of the storage grid may comprise data regarding the number and/or the location of unoccupied spaces, or holes, within the storage grid.

At S506, the processing system determines a user access route to the target location, in view of the current storage location of the grid.

The user access route may comprise a clear walking path, for a (human) user, to access the target location. The user access route may be free from physical impediments for the user. For example, the user access route may be free of bins (storage containers).

The user access route may be defined from a user start location to the target location. The user start location may be at an entrance point to the storage grid, from the physical environment in which the storage grid is located. For example, the user start location may be at a port column, similar to the port columns 126, 128 shown in Fig. 1 herein. The user start location may be at a location within the storage grid. For example, a user may attend a first target location and then attend a second, different target location, within the storage grid, without exiting the storage grid between attending those two target locations. The user start location may be at a location at or adjacent to the top of the storage grid. For example, the user start location may be at or within a user service area, located at or adjacent to the top of the grid.

The method may include determining a suitable user start location. The method may include receiving an indicator of a current user location. The method may include determining a movement of the user from a current user location to a suitable user start location, for the user access route.

The storage grid may comprise a door, or gate, or other moveable barrier, to enable selected, controlled, user access to inside the storage grid from the physical environment in which the storage grid is located. The door, gate, or other moveable barrier may be at ground level, to enable user access. The door, gate, or other moveable barrier may be at a high level, for example it may be within or adjacent to a user service areas, which is located at or adjacent to the top of the grid.

The method may include determining a start time (or time period, or window), before which the user cannot, or should not, access the user access route. The method may include determining an end time, after which the user cannot, or should not, access the user access route.

The method may comprise determining a user exit route from the target location to a user exit location. The user exit route may be the reverse of the user access route. The user exit route may be different to the reverse of the user access route. The user exit location may be the same as the user start location. The user exit location may be different to the user start location.

At S508, which is shown by the dashed outline in Fig. 5 as being an optional step, the processing system may determine a change to be made, to the storage configuration of the storage grid, to enable the user access route to be available to a user. In other words, it may determine one or more changes that should be made, before a user can use the user access route. This step S508 may be comprised within the step S506, of determining the user access route to the target location, or it may be a separate (for example, a subsequent) step.

For example, the processing system may consider multiple possible user access routes, before selecting a preferred user access route. For example, the processing system may consider the change or changes that should be made, to the storage configuration of the storage grid, to enable a respective possible user access route to become available. For example, the processing system may compare the change or changes that should be made, to the storage configuration of the storage grid, to enable a first possible user access route to become available, to the change or changes that should be made, to the storage configuration of the storage grid, to enable a second, different, possible user access route to become available. The processing system may determine a preferred user access route, as a result of that comparison.

The processing system may consider an upcoming change - for example, a planned, demanded, or expected future change - to the storage configuration of the storage grid, when considering one or more possible user access routes. For example, the processing system may consider a first possible user access route and may consider a second, different possible user access route. For example, it may consider the respective changes that would be required to implement the first and second possible user access routes, and may compare those respective changes to one or more planned, demanded, or expected future changes for the grid, and may select a preferred user access route, as a result of that comparison.

For example, the processing system may select a preferred user access route, in accordance with an upcoming change to the storage configuration of the storage grid. For example, it may select a user access route that requires relatively few or no disruptions to an expected, planned, or demanded upcoming change or changes, of which the processing system is aware. For example, the processing system may select a possible user access route that requires fewer amendments or disruptions of upcoming changes, in favour over an alternative possible user access route, for which relatively more amendments or disruptions of upcoming changes would be required.

The determination of a change to be made, to the storage configuration of the storage grid, before the user can use the user access route, may comprise determining any suitable change or changes. For example, it may comprise identifying one or more bins that should be relocated from a first location to a second, different location, within the storage grid. For example, it may comprise identifying one or more bins that should be removed from the storage grid. For example, it may comprise determining that one or more vertical columns of the storage grid should be emptied - i.e., that all stored bins should be removed from that column or columns - to provide a clear walking path for the user (i.e., a user access route), traversing that column or columns. For example, it may comprise determining that one or more vertical columns of the storage grid should be emptied - i.e., that all stored bins should be removed from that column or columns- to provide a buffer zone surrounding at least part of the determined user access route.

At S510, which is shown by the dashed outline in Fig. 5 as being an optional step, the processing system may determine a part of the storage grid, for which changes to the storage configuration should be prevented temporarily, during a time period within which a user can use the determined user access route. This step S510 may be comprised within the step S506, and/or within the step S508, or it may be a separate (for example, a subsequent) step.

In other words, at step S510, the processing system may determine that the storage configuration of certain part or parts of the grid should not change, at least during the time period in which a user can use the user access route. For example, it may comprise determining that one or more sections of the grid should be locked, in order to help ensure that the user access route is accessible and safe for the user. For example, it may comprise identifying one or more columns that should not have bins inserted into them, and/or removed from them, (at least) during the time in which a user is using (or, can use) the user access route. For example, it may comprise determining that access, by the robotic container handling vehicles, to one or more specified vertical columns, should be prevented, or locked, (at least) during the time in which a user is using (or, can use) the user access route. For example, it may comprise determining that the robotic container handling vehicles should not travel over one or more specified vertical columns, (at least) during the time in which a user is using (or, can use) the user access route. For example, it may comprise determining that such prevention measures should be in place for a longer time period than the time period for which the user can access the user access route, in order to provide a temporal safety buffer. For example, it may comprise determining that a physical safety zone should be formed, wherein that safety zone comprises the vertical columns that the user access route traverses, and optionally comprises one or more vertical columns that is/are adjacent or close to the vertical columns that the user access route traverses, wherein the storage configuration for the safety zone would not be permitted to change, at least during a time period in which a user can access the user access route.

The step S510, may include determining that, when the user access route is no longer required and there is no user present within the storage grid, the part or parts of the storage grid for which changes to the storage configuration had been temporarily prevented, may resume normal operation.

The step of determining a part of the storage grid, for which changes to the storage configuration should be prevented temporarily, (at least) during a time period within which a user can use the determined user access route, may improve user safety and confidence, for using the user access route. It may enable more efficient and cost-effective operation of the automated retrieval and storage system as a whole. For example, it may enable respectively other parts of the storage grid to remain operational - for example, to have robotic container-handling vehicles move above them and/or to have bins inserted into them, or removed from them - whilst a part or parts of the grid that include the user access route remain locked, or non-operational, in order to ensure user safety and ease of access to the target location, during that time.

At S512, which is shown by the dashed outline in Fig. 5 as being an optional step of the method 500, the processing system may generate a configuration instruction, to cause a change to be made to the storage configuration of the storage grid, before the user uses the user access route. This step S512 may be comprised within any of steps S506 to S510, or it may be a separate (for example, a subsequent) step.

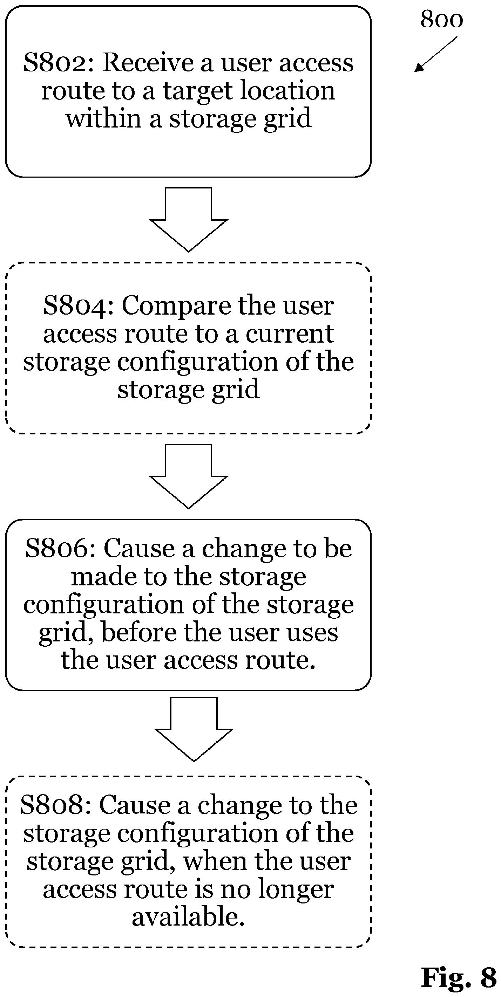

A method for configuring a storage grid for an automated storage and retrieval system, to provide a user access route to a target location within the storage grid may be better understood from the description of Fig. 8, below. However, for example, the step S512 may comprise generating an instruction for moving or changing the location of one or more bins, within the storage grid. For example, it may comprise generating an instruction for controlling a remotely operated vehicle to move, relative to the storage grid. The remotely operated vehicle may comprise a robotic container-handling vehicle (or, robot) for retrieving bins from the automated storage and retrieval system. For example, step S512 may comprise generating an instruction for controlling a remotely operated vehicle to traverse the storage grid, in a specified manner and/or direction. For example, step S512 may comprise generating an instruction for locking, or blocking, or limiting operation of and/or access to, one or more parts of the grid.

Step S512 may comprise generating a plurality of instructions, for making changes to the storage configuration of the storage grid, in order to provide safe user access to the determined user access route.

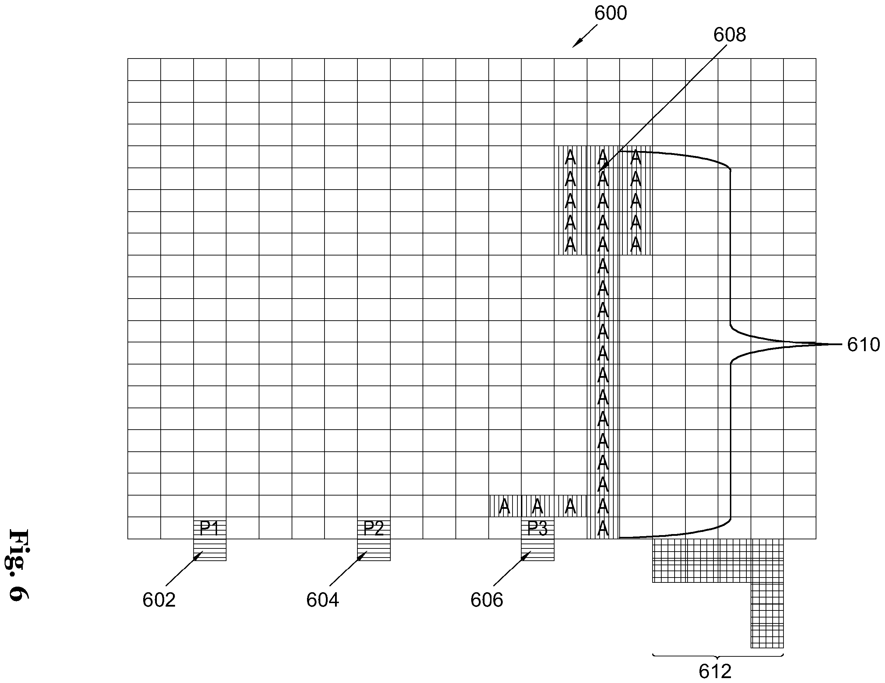

An example of a user access route, within a grid for an automated storage and retrieval system, which may be determined according to the method 500 of Fig. 5, is shown in Fig. 6. This example is provided for illustrative purposes, and should not be regarded as limiting on the present disclosure.

In Fig. 6, a storage grid 600 is shown in plan view. A user service area 612 is provided adjacent the top of the storage grid 600. The user service area 612 may conventionally be used for accessing the rail system that is located on top of the grid 600, for maintenance of one or more remotely controlled vehicles (or, robotic container handling vehicles, or robots) that traverse the rail system. According to the present disclosure, the user service area 612 may provide a start location, for accessing a target location within the storage grid 600, via a user access route that may be determined according to the method 500 of Fig. 5.

The storage grid 600 of Fig. 6 has three ports - P1 602, P2 604, and P3 606 - all located at ground level. In this example, the storage grid 600 is configured so that user access is permissible (or, may be permissible, in some circumstances) via any of the three ports, P1 602, P2 604, and P3 606. In other examples, a storage grid may have a different size and/or shape to the example storage grid 600 of Fig. 6. In other examples, a storage grid may have a different number, and/or different locations, of (possible) user access points, to the respective grid.

In the example of Fig. 6, the user service area 612 and/or any of the three ports, P1 602, P2 604, and P3 606, may be used as a start location for a user access route to a target location, within the storage grid 600. In this example, the target location 608 is a location on the ground floor of the grid, closest to the third port, P3 606. A user access route 610 has been determined, in accordance with the method 500 of Fig, 5, described above, to the target location 608. The user access route 610 is shown by a plurality of boxes, each representing a different respective vertical column of the grid, and each comprising a letter 'A'. As can be seen, the user access route defines a route, via spaces (A) defined by empty vertical columns, for the user to walk, or otherwise move, along the ground floor of the grid 600, from the third port P3 606 to the target location 608.

In this example, the target location 608 comprises a single co-ordinate location, within the grid 600, and there is a physical buffer zone provided, wherein additional columns surrounding the target location 608 have been emptied. This may be for enhanced user safety and/or to enable the user better movement when accessing the target location 608, for example for cleaning, maintenance, or inspection purposes. In other examples, the target location may itself comprise multiple locations, for example multiple locations that combine to form a pathway. For example, the target location may comprise a pathway or section within the grid that requires cleaning or inspection or maintenance, at a given time.

In this example, the user may exit the grid 600 by travelling back to the third port P3 606, from the target location 608, along the same user access route 610. However, in other examples, a different exit route may be provided.

As explained above, a storage grid of an automated storage and retrieval system typically comprises a frame formed by a plurality of generally rectilinear, adjacent vertical columns, formed between vertical frame members, and extending in the X and Y directions. The plurality of vertical columns may be for storing one or more bins. Each vertical column - or, the bins, stacked within each vertical column - may be regarded as defining a plurality of horizontal storage levels. In other words, each vertical column may be for storing a plurality of bins, stacked, one on top of the other, with each bin occupying, or defining, a different respective horizontal storage level, within the respective column in which it is stored. Typically, all bins stored within a grid will be of the same vertical height as one another, such that the horizontal storage levels within each vertical column of storage grid will be co-planar with the horizontal storage levels within the respective other vertical columns, thereby defining overall horizontal storage levels of the storage grid.

A user access route may be determined, or defined, across a single horizontal storage level of the storage grid - such as in the example of Fig. 6, discussed above. In other words, the user access route may be determined to remain on the same horizontal level, from the user start location to the target location. The user access route may, for example, be defined across a ground level, or floor level, of the physical environment in which the storage grid is located.

The user access route may, in some cases, be determined across multiple horizontal storage levels of the storage grid. In other words, the user access route may include the transition, or movement, of the user from a first horizontal level to a second, different horizontal level, at a point or points between the user start location and the target location. For example, the second, different, horizontal level may be vertically higher than the first horizontal level. This may occur, for example, when the user access route begins on the ground/floor level and the target location, within the storage grid, is above the ground/floor level. For example, the second, different, horizontal level may be vertically lower than the first horizontal level. This may occur, for example, when the user access route begins at the top of the grid and the target location, within the storage grid, is below the top of the grid.

The user access route - or, a set of instructions, for accessing the user access route - may include an indication or instruction that the user may use a step (or, stair) formed from one or more bins, stored in one of the vertical storage columns, to move the user from a first, horizontal storage level to a second, different, horizontal storage level, within the storage grid. For example, the first horizontal storage level may be vertically higher than the second, different, horizontal storage level. For example, the first horizontal storage level may be vertically lower than the second, different, horizontal storage level.

For example, the instruction or indication may be that the user should step on a lid or cover of one or more stored bins, in order to change the user's horizontal level. For example, the lid or cover may be a lid or cover that covers substantially all of an opening that is (in the absence of that lid or cover) defined in an upper part of the stored bin(s). For example, the lid or cover may be a lid or cover that covers a part or parts of an opening that is (in the absence of that lid or cover) defined in an upper part of the stored bin(s). For example, a bin may be rotated, or flipped, or adjusted, so that a surface that forms a wall or a base of the bin, in usual use, becomes a vertically upper surface of the bin, which a user may step on.

The method 500 may include identifying a horizontal storage level, within one of the vertical storage columns, at which a bin should be stored and at least partially covered - or, an at least partial cover created for it - to enable the user to move from a first horizontal storage level to a second, different, horizontal storage level. Multiple bins, for example stored at a common level within multiple respective vertical columns, may be identified, for providing a step, or stair, for the user to move from one level to another.

Conventionally, bins (storage containers) are stored, uncovered, in a storage grid of the type described herein. In other words, such bins do not typically include lids or top coverings, when stored in a storage grid. The method 500 may include a step of determining which stored bins should be (at least partially) covered, in order for the user to use the user access route. This step may be comprised within any of steps S506 to S510, or it may be a separate (for example, a subsequent) step. The user may be instructed to step (i.e., stand) on a covered bin, within the storage grid, once it has been suitably (at least partially) covered.

For example, step S512 of the method 500 may comprise generating an instruction for controlling one or more remotely controlled robotic container-handling vehicles, or other remotely controlled device(s), to lower one or more suitable lids, or covers, onto a specified bin or bins, within the storage grid. The/each lid may comprise a stepper plate. The/each lid may be sized and shaped to fit securely on (or near) the top part of a stacked bin. The/each lid may be sized and shaped to cover all of the top part of the (respective) stacked bin. The/each lid may be sized and shaped to cover just a part or parts of the top part of the respective stacked bin. The/each lid may be formed so as to withstand the force of being stepped on (i.e., being stood upon), by a user.

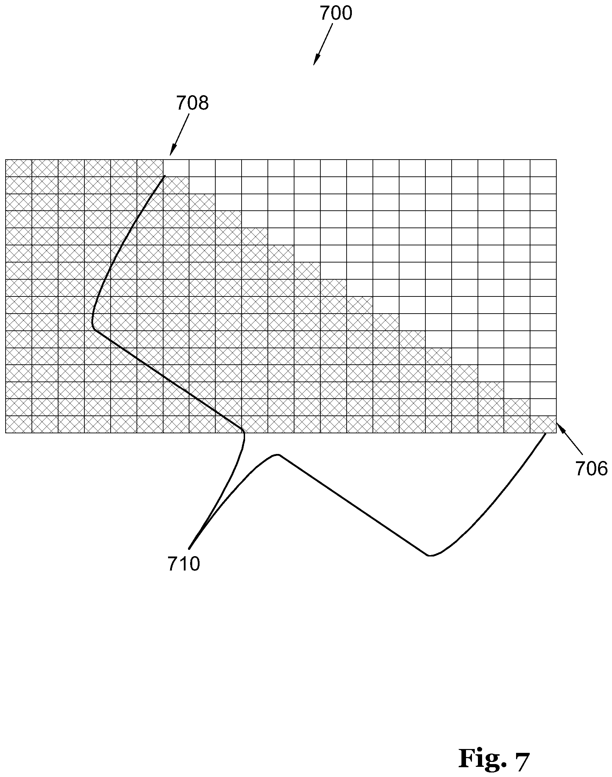

Fig. 7 shows a cross-sectional side view of a storage grid 700, with a user access route 710 defined therein, across multiple horizontal levels. This example is provided for illustrative purposes, and should not be regarded as limiting on the present disclosure. The user access route 710 of Fig. 7 may be determined according to the method 500 of Fig. 5.

The user access route 710 starts at a start location 706 at an outer edge of the grid 700, at floor level. The user access route 710 comprises a 'staircase' formed from bins being stacked in a plurality of adjacent columns. In this example, each column has one more bin stacked therein than the preceding column has, within the user access route 710. This forms a user access route 710 that increases in vertical height, from the start location 706 to the target location 708.

The bins in Fig. 7 may be at least partially covered by a suitable lid, such as stepper plate, before user access is granted, to the user access route 710.

Fig. 8 is a flowchart of a method 800 for configuring a storage grid for an automated storage and retrieval system, to provide a user access route to a target location within the storage grid. The method 800 may be implemented, or controlled, by a suitable controller such as by the processing system 400, or by a distinct processing system (e.g., by a processing system of a robotic container-handling vehicle). The user access route may be across a single horizontal level or it may traverse multiple horizontal levels of the storage grid.

At S802, the processing system receives a user access route to a target location, at which a user presence may be demanded or desired.

The user access route, which the method 800 of Fig. 8 is for configuring a storage grid to provide, may be (or, may have been) determined according to the method 500 described hereabove. In some cases, the method 800 of Fig. 8 may be for configuring a storage grid to provide a user route that has been determined or defined according to another method, or that has been otherwise received by the controller.

At S804, the processing system compares the user access route to a current storage configuration of the storage grid. The processing system may compare to assess whether the user access route is currently available, or whether one or more changes should be made, to make the user access route available. For example, it may compare to assess whether one or more bins, within the storage grid, should be moved or relocated. For example, it may compare to assess whether access, by one or one more robotic container-handling vehicles, to one or more vertical columns of the storage grid, should be prevented, or locked, to enable the user access route to be determined.

Step S804 is indicated, by the dashed line in Fig. 8, as being an optional step. This is because, in some cases, the step S804 of comparing the user access route to a current storage configuration of the storage grid may already have been carried out as part of a determination of the user access route. For example, if the user access route is determined according to the method 500 of Fig. 5, described hereabove, the step S804 may have been carried out - such as at step S506. In such cases, there may be no need for the comparison to be repeated at step S804. In such cases, for example, the user access route itself may include - or, may be provided in conjunction with - an indication of which changes, if any, should be made to the storage configuration of the storage grid, in order to make the user access route available to the user.

At S806, the processing system, as a result of the comparison that has been made, causes a change to be made to the storage configuration of the storage grid, before the user uses the user access route.

Step S806 may comprise causing any suitable change or changes to be made to the storage configuration of the storage grid. For example, it may comprise issuing an instruction or control signal to any suitable device or entity. For example, it may comprise issuing an instruction or control signal to cause a remotely operated vehicle to move, relative to the storage grid. The remotely operated vehicle may comprise a robotic container-handling vehicle for retrieving containers from the automated storage and retrieval system. For example, it may comprise issuing an instruction or control signal to change the location of one or more bins, within the storage grid, and/or to remove a bin from the storage grid. For example, it may comprise issuing an instruction or control signal to, at least temporarily, lock or freeze operation of one or more parts of the grid. For example, it may comprise issuing an instruction or control signal to cause one or more remotely operated vehicles to move, relative to the storage grid. For example, it may comprise issuing an instruction or control signal to control the remotely operated vehicle(s) to traverse the storage grid.

For example, step S806 may comprise controlling a remotely operated vehicle to move, relative to the storage grid. For example, it may comprise controlling the remotely operated vehicle, or a lifting device associated therewith, to remove a storage container form the grid or to move a storage container to a different location, within the grid.

For example, step S806 may comprise controlling a remotely operated vehicle to apply a cover to a storage container, which is stored within the storage grid. The cover may comprise a stepper plate. The cover may provide a covering or lid for part or all of a top part of the storage container. For example, step S806 may comprise controlling a remotely operated vehicle to rotate, flip, or adjust a storage container, so that a face of the storage container forms a surface on which a user can step (i.e., stand), in order to move the user from one horizontal storage level to another, within the storage grid.

At S808, which is shown by the dashed outline in Fig. 8 as being an optional step of the method 800, the processing system may cause a change to be made to the storage configuration of the storage grid, when the user access route is no longer available.

For example, step S808 may comprise generating a configurating instruction to enable one or more vertical columns that were emptied, to provide the user access route, to resume operation for storing storage bins therein. For example, step S808 may comprise controlling one or more remotely operated vehicles to move, relative to the storage grid, in a manner that was not permitted during a time period in which the user access route was available to the user. For example, step S808 may comprise generating a configurating instruction to enable one or more bins that were moved within, or removed from, the storage grid to enable the user access route to be provided, to be returned to their previous location(s), within the storage grid. For example, step S808 may comprise generating any other suitable configurating instruction(s).

One or more of the steps of the method 500 of Fig. 5 may be combined with one or more of the steps of the method 800 of Fig. 8, in any suitable manner.

One or all of the steps of the method 500 of Fig. 5 and/or one or all of the steps of the method 800 of Fig. 8 may be repeated. For example, one or both methods 500, 800 may be repeated to determine, and/or to configure a storage grid for the provision of, different user access routes at different respective times.

The present disclosures comprises a non-transitory computer readable medium storing instructions which, when executed by one or more processors of a computing device, cause the computing device to carry out one or more of the methods 500, 800 disclosed herein.

The present disclosures comprises a commissioning system for determining and/or providing a user access route to a target location in a storage grid for an automated storage and retrieval system, wherein the storage grid is installed in a physical environment. The commissioning system may comprise a remotely operated vehicle configured to move relative to the storage grid; and a computing device configured to carry out the method 500 of Fig. 5 and/or the method 800 of Fig. 8, as disclosed herein.

The present disclosure comprises a method of controlling a remotely operated vehicle to (help) provide a user access route within a storage grid for an automated storage and retrieval system. The method may comprise receiving an indication of a user access route, which is to be provided within the storage grid. The method may comprise determining, or receiving an indication of a determination of, one or more changes that should be made to the storage configuration of the storage grid, to enable the user access route to be provided. The method may comprise controlling the remotely operated vehicle to move relative to the storage grid, to help provide said determined change or changes.

For example, the remotely operated vehicle may be controlled to move to a location, above or close to a specified vertical column of the storage grid. For example, the remotely operated vehicle may comprise or be connected to a lifting device, and the remotely operated vehicle may be controlled to use the lifting device to remove one or more bins from within a column of the storage grid.

The methods and systems described herein may (individually and/or in combination) enable safe and convenient user access to be granted, to a location within a storage grid for an automated storage and retrieval system, without necessitating the complete evacuation of all stored bins from the storage grid. The methods and systems described herein may (individually and/or in combination) enable continued operation of some parts of the storage grid, whilst the user access route is available to the user via respectively other parts of the storage grid. The methods and systems described herein may (individually and/or in combination) contribute to enhanced efficiency of the storage grid and of the automated storage and retrieval system, whilst ensuring user safety. They may (individually and/or in combination) provide user access to parts of the storage grid, for purposes such as cleaning, maintenance, and/or inspection, which are not conventionally accessible in automated storage and retrieval systems.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for determining a user access route to a target location within a storage grid for an automated storage and retrieval system; the method comprising:
Receiving an indicator of the target location;
Receiving data associated with a current storage configuration of the storage grid; and
Determining a user access route to the target location, in view of the current storage configuration of the storage grid.

2. The method of claim 1, wherein the method comprises determining a change to be made, to the storage configuration of the storage grid, to enable the user access route to be available to a user.

3. The method of claim 2, wherein the storage grid is for storing one or more storage containers, wherein determining a change to be made, to the storage configuration of the storage grid, before the user can use the user access route, comprises identifying one or more storage containers that should be relocated from a first location to a second, different location.

4. The method of any of claims 1 to 3, wherein the method comprises determining a part of the storage grid, for which changes to the storage configuration should be prevented temporarily, during a time period within which a user can use the determined user access route.

5. The method of any of claims 1 to 4, wherein the method comprises generating a configuration instruction, to cause a change to be made to the storage configuration of the storage grid, before the user uses the user access route.

6. The method of any preceding claim, wherein the method comprises determining a user exit route from the target location to an exit location.

7. The method of any preceding claim, wherein the storage grid comprises a plurality of horizontal storage levels, wherein the user access route is determined across a single horizontal storage level of the storage grid.

8. The method of claims 1 to 6, wherein the storage grid comprises a plurality of horizontal storage levels, wherein the user access route is determined across multiple horizontal storage levels of the storage grid.

9. The method of claim 8, wherein the storage grid comprises a plurality of vertical columns, for storing one or more storage containers, wherein determining a user access route to the target location, in view of the current storage configuration of the storage grid, comprises determining a route via which a user can use a storage container, stored in a vertical storage column of the storage grid, to move the user from a first horizontal storage level to a second, different, horizontal storage level.

10. The method of claim 8 or claim 9, wherein the storage grid comprises a plurality of vertical columns, for storing one or more storage containers, wherein the method comprises identifying a horizontal storage level, within one of the vertical storage columns, at which a storage container should be stored, and a cover created for at least part of said container, to enable the user to move from a first horizontal storage level to a second, different, horizontal storage level.

11. The method of any preceding claim, wherein the data associated with the current storage configuration of the storage grid comprises a future change to the storage configuration of the storage grid.

12. A computer-implemented method of configuring a storage grid for an automated storage and retrieval system, to provide a user access route to a target location within the storage grid, the method comprising:
Receiving a user access route to the target location; and
Causing a change to be made to the storage configuration of the storage grid, before the user uses the user access route.

13. The method of claim 12, wherein the method comprises comparing the user access route to a current storage configuration of the storage grid; and, as a result of that comparison, causing the change to be made to the storage configuration of the storage grid, before the user uses the user access route.

14. The method of claim 12 or claim 13, wherein the method comprises controlling a remotely operated vehicle to move relative to the storage grid, before the user uses the user access route.

15. A non-transitory computer readable medium storing instructions which when executed by one or more processors of a computing device, cause the computing device to carry out the method according to any preceding claim.
